# EUROPÄISCHE PATENTANMELDUNG

(11) **EP 3 018 634 A1**
(43) Veröffentlichungstag der Anmeldung: **11.05.2016**
(21) Anmeldenummer: 14191667.6
(22) Anmeldetag: 04.11.2014
(51) Int. Cl.: G07B 15/00

(54) **Elektronische Zugangsberechtigung und Verfahren zur Verwendung derselben**

(71) Anmelder: SKIDATA AG, 5083 Grödig/Salzburg (AT)
(72) Erfinder: Lang, Christian, 5120 Haigermoos (AT); Scheiber, Anton, 5700 Zell am See (AT)
(74) Vertreter: Karakatsanis, Georgios

(57) **Zusammenfassung**

Es wird eine elektronische Zugangsberechtigung vorgeschlagen, enthaltend örtliche und zeitliche Gültigkeitsdaten, die von einer Zugangskontrollvorrichtung (4) berührungslos auslesbar sind, welche online erwerbbar bzw. für den Fall einer Akkreditierung als Sonderform einer Zugangsberechtigung online beantragbar ist und nach erfolgreichem Ausstellen in elektronischer Form auf ein elektronisches Gerät (1) eines Nutzers übertragbar ist, wobei Änderungen seitens des Ausstellers der Zugangsberechtigung bezüglich der Gültigkeitsdaten der Zugangsberechtigung mittels einer Verbindung zur Datenkommunikation zwischen einem Server (2) des Ausstellers der Zugangsberechtigung und dem elektronischen Gerät (1) auf die im elektronischen Gerät (1) abgelegte elektronische Zugangsberechtigung übertragbar und über eine Anzeigevorrichtung (5) des elektronischen Geräts anzeigbar sind.

## Beschreibung

Die vorliegende Erfindung bezieht sich auf eine elektronische Zugangsberechtigung gemäß dem Oberbegriff des Patentanspruchs 1. Des Weiteren bezieht sich die Erfindung auf ein Verfahren zur Verwendung einer erfindungsgemäßen elektronischen Zugangsberechtigung.

Aus dem Stand der Technik sind elektronische Tickets bzw. elektronische Zugangsberechtigungen bekannt. Sie dienen als papierloser Ersatz für eine Fahrkarte oder eine Eintrittskarte und enthalten in der Regel einen berührungslos auslesbaren Datensatz, der von einer entsprechenden Zugangskontrollvorrichtung ausgelesen wird. Beispielsweise können die in einem tragbaren Gerät gespeicherten, einem elektronischen Ticket entsprechenden Datensätze über RFID Technologie von einer Zugangskontrollvorrichtung ausgelesen werden. Ferner ist es möglich, einen einem elektronischen Ticket entsprechenden Datensatz mittels eines Barcodes über eine Anzeigevorrichtung eines mobilen Gerätes, beispielsweise eines Mobiltelefons anzuzeigen, wobei die Daten mittels eines Barcodescanners berührungslos ausgelesen werden können, um im Falle einer gültigen Zugangsberechtigung Zugang zu gewähren.

Eine besondere Form einer Zugangsberechtigung sind die sogenannten Akkreditierungen, nämlich die Zulassungen von bestimmten Personen, beispielsweise von Medienvertretern, zu bestimmten Veranstaltungen. Durch Akkreditierungen wird in der Regel bestimmt, wer wann und wo an einem Event teilnehmen darf.

Bei Veranstaltungen kann es jedoch oft vorkommen, dass sich Zeit und Ort z.B. aufgrund externer Umstände ändern, wobei in diesem Fall die Teilnehmer bzw. Kunden, die über eine entsprechende Zugangsberechtigung verfügen oder auch Personen, denen eine Akkreditierung zugeteilt worden ist, informiert werden müssen, was nach dem Stand der Technik mit erheblichem Aufwand verbunden ist. Für den Fall, dass die Teilnehmer, Kunden oder akkreditierten Personen nicht rechtzeitig informiert werden, entstehen neben Komforteinbußen für diese Personen auch Imageschäden für die Veranstalter, wobei ein erheblicher Personalaufwand erforderlich ist, um entsprechende Umbuchungen vorzunehmen, neue Zugangsberechtigungen zu vergeben, die Akkreditierungen anzupassen und die Personenflüsse zum aktuellen Veranstaltungsort zu leiten.

Des Weiteren können elektronische Zugangsberechtigungen nachträglich nicht angepasst werden. Z.B. kann ein Kunde nicht ohne weiteres eine Sitzplatzbuchung mittels der erworbenen Zugangsberechtigung ändern. Vielmehr muss er sich mit dem Veranstalter persönlich oder in elektronischer Form in Verbindung setzen, um eine neue Zugangsberechtigung zu erhalten.

Der vorliegenden Erfindung liegt die Aufgabe zugrunde, eine elektronische Zugangsberechtigung anzugeben, durch deren Verwendung die erwähnten Nachteile vermieden werden. Ferner soll ein Verfahren zur Verwendung einer erfindungsgemäßen Zugangsberechtigung angegeben werden.

Diese Aufgabe wird für eine elektronische Zugangsberechtigung durch die Merkmale des Patentanspruchs 1 gelöst. Ein Verfahren zur Verwendung einer erfindungsgemäßen Zugangsberechtigung ist Gegenstand des Patentanspruchs 8. Vorteilhafte Ausgestaltungen gehen aus den Unteransprüchen hervor.

Demnach wird eine elektronische Zugangsberechtigung vorgeschlagen, welche online, beispielsweise über ein Smartphone oder einen Computer oder über ein POS-Terminal erwerbbar bzw. für den Fall einer Akkreditierung online beantragbar ist und nach erfolgreichem Ausstellen in elektronischer Form auf ein elektronisches, vorzugsweise tragbares Gerät eines Nutzers übertragbar ist. Die Zugangsberechtigung kann mittels einer geeigneten Zugangskontrollvorrichtung, die beispielsweise als RFID-Leseeinrichtung oder als Barcodescanner ausgeführt sein kann, berührungslos ausgelesen werden.

Gemäß der Erfindung enthält die elektronische Zugangsberechtigung örtliche und zeitliche Gültigkeitsdaten, beispielsweise Ort, Zeit und gebuchter Sitzplatz für eine Veranstaltung oder Ort und Zeit der zur Verfügungstellung einer gebuchten Dienstleistung oder eine Gültigkeitszeitspanne und ein Gültigkeitsgebiet, die dem Nutzer angezeigt werden, wobei Änderungen seitens des Ausstellers der Zugangsberechtigung bezüglich der Gültigkeitsdaten mittels einer Verbindung zur Datenkommunikation zwischen einem Server des Ausstellers der Zugangsberechtigung und dem elektronischen Gerät vorzugsweise in Echtzeit auf die elektronische Zugangsberechtigung übertragbar und anzeigbar sind.

Dies kann beispielsweise über eine Push-Mitteilung erfolgen, die Informationen über die Änderung enthält und auf die im elektronischen Gerät abgelegte elektronische Zugangsberechtigung überträgt.

Hierbei wird gemäß einer Weiterbildung der Erfindung der Nutzer bei Änderungen der örtlichen und/oder zeitlichen Gültigkeitsdaten einer elektronischen Zugangsberechtigung seitens des Ausstellers der Zugangsberechtigung, die auch eine Akkreditierung sein kann, über ein optisches und/oder akustisches Signal, welches über das elektronische Gerät bei oder nach Erhalt der Änderungen erzeugt wird, informiert. Dieses Signal kann beispielsweise über die Push-Mitteilung, die Informationen über die Änderung enthält und auf die im elektronischen Gerät abgelegte elektronische Zugangsberechtigung überträgt und diese somit aktualisiert, generiert werden.

Im Rahmen einer Weiterbildung der Erfindung ist die elektronische Zugangsberechtigung auch seitens des Nutzers anpassbar. Hierbei kann der Nutzer über eine ihm über eine Anzeigevorrichtung des elektronischen Gerätes angezeigte grafische Oberfläche der elektronischen Zugangsberechtigung über einen Touchscreen des elektronischen Gerätes oder menügesteuert gewünschte Änderungen der örtlichen und/oder zeitlichen Gültigkeitsdaten eingeben, die mittels einer Verbindung zur Datenkommunikation zum Server des Ausstellers der Zugangsberechtigung übertragbar sind, wo sie geprüft und gegebenenfalls angenommen werden, wobei der Nutzer über eine Verbindung seines elektronischen Gerätes mit dem Server des Ausstellers, beispielsweise über eine Push-Mitteilung informiert wird, ob Änderungen angenommen worden sind oder nicht.

Die vom Aussteller der elektronischen Zugangsberechtigung angenommenen Änderungen sind vorzugsweise in Echtzeit auf die elektronische Zugangsberechtigung übertragbar. Dies kann beispielsweise über eine Push-Mitteilung erfolgen, die Informationen über die angenommenen Änderungen enthält und auf die im elektronischen Gerät abgelegte elektronische Zugangsberechtigung überträgt und diese aktualisiert.

Hierbei kann der Nutzer über ein optisches und/oder akustisches Signal, welches über das elektronische Gerät bei oder nach Erhalt der Änderungen erzeugt wird, informiert werden. Dieses Signal kann beispielsweise über die Push-Mitteilung, die Informationen über die Änderungen enthält und auf die im elektronischen Gerät abgelegte elektronische Zugangsberechtigung überträgt und diese somit aktualisiert, generiert werden.

Die gewünschten Änderungen der örtlichen und/oder zeitlichen Gültigkeitsdaten seitens des Nutzers können kostenpflichtig sein, und zum Beispiel sogenannte Upgrades betreffen, beispielsweise ein Upgrade auf eine höhere Ticketkategorie oder den Erwerb von Zusatzdienstleistungspaketen wie beispielsweise ein Verpflegungspaket oder einen SPA-Besuch in einem Skigebiet. Der Nutzer muss hierbei keine gesonderte Software aufrufen, sondern kann diese Änderungen direkt über die grafische Oberfläche der elektronischen Zugangsberechtigung über einen Touchscreen oder menügesteuert wie bereits erläutert beantragen, wobei, wenn die gewünschten Änderungen angenommen werden können, z.B. wenn Upgrades verfügbar sind, der Nutzer über die Verbindung zur Datenkommunikation zwischen dem elektronischen Gerät und dem Server des Ausstellers beispielsweise über eine Push-Mitteilung informiert wird und über die Verbindung zur Datenkommunikation zwischen dem elektronischen Gerät und dem Server des Ausstellers der Zugangsberechtigung ein entsprechender Zahlungsprozess über im elektronischen Gerät oder beim Server des Ausstellers der Zugangsberechtigung abgelegte oder manuell einzugebende Kreditkartenoder Kontodaten durchführbar ist. Nach erfolgter Bezahlung werden die angenommenen Änderungen vorzugsweise in Echtzeit, beispielsweise über eine Push-Mitteilung auf die elektronische Zugangsberechtigung im elektronischen Gerät des Nutzers übertragen.

Durch die erfindungsgemäße Konzeption einer bidirektional anpassbaren elektronischen Zugangsberechtigung wird der Komfort für Aussteller von Zugangsberechtigungen bzw. Veranstalter und Kunden bzw. akkreditierte Personen erhöht und der logistische Aufwand reduziert.

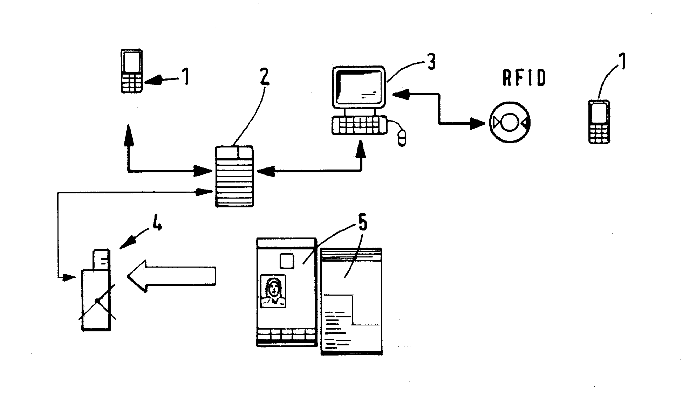

Die Erfindung wird im Folgenden anhand der beigefügten Figur beispielhaft näher erläutert.

Mit dem Bezugszeichen 1 ist ein elektronisches Gerät eines Nutzers dargestellt, welches bei dem gezeigten Beispiel als Mobiltelefon ausgeführt ist. Das elektronische Gerät kann auch als sogenanntes Tablet oder als portabler Computer ausgeführt sein. Die erfindungsgemäße elektronische Zugangsberechtigung kann online z.B. mittels einer Internetverbindung des Mobiltelefons 1 zu einem Server 2 des Ausstellers der Zugangsberechtigung erworben werden, wobei nach erfolgtem Ausstellen diese online auf das Mobiltelefon 1 übertragen wird. Alternativ kann die Zugangsberechtigung an einem Schalter 3 oder an einem Automaten erworben werden, wobei die Zugangsberechtigung anschließend beispielsweise über RFID, Bluetooth^{®}, E-Mail oder SMS auf das Mobiltelefon 1 übertragen wird.

Für den Fall, dass die Zugangsberechtigung eine Akkreditierung ist, kann diese über ein elektronisches Gerät, beispielsweise über ein Mobiltelefon 1 online beantragt werden und wird nach erfolgtem Ausstellen in elektronischer Form auf das elektronische Gerät 1 des Nutzers übertragen. Auch kann die Akkreditierung an einem Schalter 3 beantragt werden, wobei sie nach erfolgtem Ausstellen z.B. über RFID, Bluetooth^{®}, E-Mail oder SMS auf das Mobiltelefon 1 übertragen wird.

Die Zugangsberechtigung, auch als Akkreditierung ausgeführt, kann mittels einer geeigneten, z.B. mit dem Server 2 des Ausstellers der Zugangsberechtigung zum Zweck der Datenkommunikation verbundenen Zugangskontrollvorrichtung 4, die beispielsweise als RFID-Leseeinrichtung oder als Barcodescanner ausgeführt sein kann, berührungslos ausgelesen werden.

Um das berührungslose Auslesen mittels RFID-Technik zu ermöglichen, weist das elektronische Gerät die erforderliche RFID-Funktionalität auf, wobei das Auslesen mittels eines Barcodescanners durch Anzeigen eines entsprechenden Barcodes mittels einer Anzeigevorrichtung des elektronischen Geräts ermöglicht wird. Ferner kann die Zugangsberechtigung bzw. die Akkreditierung manuell überprüft werden, wobei diese zu diesem Zweck mittels einer Anzeigevorrichtung 5 des elektronischen Gerätes in für das Personal lesbarer Form angezeigt werden kann. Für den Fall einer Akkreditierung kann auch ein Bild der akkreditierten Person angezeigt werden.

Im Rahmen einer Weiterbildung können im Falle einer Akkreditierung Pseudonyme verwendet werden, um die Identität des Nutzers (beispielsweise einer VIP) nicht preiszugeben. Hierbei kann über die Anzeigevorrichtung 5 des elektronischen Gerätes 1 als Name ein Pseudonym angezeigt werden, wobei im System des Ausstellers der Akkreditierung der wirkliche Name abgelegt ist.

Die elektronische Zugangsberechtigung enthält örtliche und zeitliche Gültigkeitsdaten, beispielsweise Ort, Zeit und Angaben über einen gebuchten Sitzplatz für eine Veranstaltung oder Ort und Zeit der zur Verfügungstellung einer gebuchten Dienstleistung oder eine Gültigkeitszeitspanne und ein Gültigkeitsgebiet (z.B. ein Tagesskipass für ein bestimmtes Skigebiet), die dem Nutzer über die Anzeigevorrichtung 5 des elektronischen Gerätes 1 angezeigt werden, wobei Änderungen seitens des Ausstellers der Zugangsberechtigung bezüglich der Gültigkeitsdaten, was z.B. aufgrund einer Datumsänderung für ein Konzert oder der Änderung der Uhrzeit und/oder des Ortes für eine Pressekonferenz der Fall sein kann, mittels einer Verbindung zur Datenkommunikation zwischen dem Server 2 des Ausstellers der Zugangsberechtigung und dem elektronischen Gerät 1 vorzugsweise in Echtzeit auf die die im elektronischen Gerät 1 abgelegte elektronische Zugangsberechtigung übertragen, wodurch die Zugangsberechtigung mit den neuen Gültigkeitsdaten aktualisiert wird, und dem Nutzer über die Anzeigevorrichtung 5 des elektronischen Gerätes 1 angezeigt werden.

Dies erfolgt vorzugsweise über eine Push-Mitteilung, die Informationen über die Änderung enthält und auf die im elektronischen Gerät 1 abgelegte elektronische Zugangsberechtigung überträgt und diese somit aktualisiert. Durch die Push-Mitteilung kann in vorteilhafter Weise ein optisches und/oder akustisches Signal generiert werden, um die Aufmerksamkeit des Nutzers auf die Änderungen zu richten.

Gemäß einer vorteilhaften Weiterbildung der Erfindung kann die elektronische Zugangsberechtigung auch seitens des Nutzers angepasst bzw. geändert werden. Hierbei kann der Nutzer über eine ihm über die Anzeigevorrichtung 5 des elektronischen Gerätes 1 angezeigte grafische Oberfläche der elektronischen Zugangsberechtigung über einen Touchscreen des elektronischen Gerätes gewünschte Änderungen der örtlichen und/oder zeitlichen Gültigkeitsdaten eingeben, die mittels einer Verbindung zur Datenkommunikation zum Server 2 des Ausstellers der Zugangsberechtigung übertragen werden, wo sie geprüft und gegebenenfalls angenommen werden, wobei der Nutzer über eine Verbindung seines elektronischen Gerätes 1 mit dem Server 2 des Ausstellers, beispielsweise über eine Push-Mitteilung informiert wird, ob Änderungen angenommen worden sind oder nicht.

Die vom Aussteller der elektronischen Zugangsberechtigung angenommenen Änderungen sind vorzugsweise in Echtzeit auf die elektronische Zugangsberechtigung übertragbar, wodurch die Zugangsberechtigung mit den neuen Gültigkeitsdaten aktualisiert wird. Dies kann beispielsweise über eine Push-Mitteilung erfolgen, wie bereits für den Fall von Änderungen seitens des Ausstellers der elektronischen Zugangsberechtigung erläutert.

## Patentansprüche

1. Elektronische Zugangsberechtigung enthaltend örtliche und zeitliche Gültigkeitsdaten, die von einer Zugangskontrollvorrichtung (4) berührungslos auslesbar sind, welche online erwerbbar bzw. für den Fall einer Akkreditierung als Sonderform einer Zugangsberechtigung online beantragbar ist und nach erfolgreichem Ausstellen in elektronischer Form auf ein elektronisches Gerät (1) eines Nutzers übertragbar ist, **dadurch gekennzeichnet, dass** Änderungen seitens des Ausstellers der Zugangsberechtigung bezüglich der Gültigkeitsdaten der Zugangsberechtigung mittels einer Verbindung zur Datenkommunikation zwischen einem Server (2) des Ausstellers der Zugangsberechtigung und dem elektronischen Gerät (1) auf die im elektronischen Gerät (1) abgelegte elektronische Zugangsberechtigung übertragbar und über eine Anzeigevorrichtung (5) des elektronischen Geräts anzeigbar sind.

2. Elektronische Zugangsberechtigung nach Anspruch 1, **dadurch gekennzeichnet, dass** der Nutzer bei Änderungen der örtlichen und/oder zeitlichen Gültigkeitsdaten einer elektronischen Zugangsberechtigung seitens des Ausstellers der Zugangsberechtigung über ein optisches und/oder akustisches Signal, welches über das elektronische Gerät (1) bei oder nach Erhalt der Änderungen erzeugt wird, informiert wird.

3. Elektronische Zugangsberechtigung nach Anspruch 1 oder 2, **dadurch gekennzeichnet, dass** die Änderungen der örtlichen und/oder zeitlichen Gültigkeitsdaten einer elektronischen Zugangsberechtigung seitens des Ausstellers der Zugangsberechtigung über eine Push-Mitteilung, die Informationen über die Änderungen enthält, auf die im elektronischen Gerät (1) abgelegte elektronische Zugangsberechtigung übertragbar sind.

4. Elektronische Zugangsberechtigung nach Anspruch 1, 2 oder 3, **dadurch gekennzeichnet, dass** gewünschte Änderungen der örtlichen und/oder zeitlichen Gültigkeitsdaten der Zugangsberechtigung seitens des Nutzers über eine ihm über eine Anzeigevorrichtung (5) des elektronischen Gerätes (1) angezeigte grafische Oberfläche der elektronischen Zugangsberechtigung über einen Touchscreen oder menügesteuert eingebbar und mittels einer Verbindung zur Datenkommunikation zum Server (2) des Ausstellers der Zugangsberechtigung übertragbar sind, wo sie geprüft werden, wobei der Nutzer über eine Verbindung zur Datenkommunikation zwischen dem elektronischen Gerät (1) mit dem Server (2) des Ausstellers informiert wird, ob die Änderungen angenommen worden sind oder nicht, wobei, wenn Änderungen angenommen worden sind, diese mittels einer Verbindung zur Datenkommunikation zwischen dem Server (2) des Ausstellers der Zugangsberechtigung und dem elektronischen Gerät (1) auf die elektronische Zugangsberechtigung im elektronischen Gerät (1) übertragbar und über die Anzeigevorrichtung (5) des elektronischen Geräts (1) anzeigbar sind.

5. Elektronische Zugangsberechtigung nach Anspruch 4, **dadurch gekennzeichnet, dass** bei kostenpflichtigen gewünschten Änderungen der örtlichen und/oder zeitlichen Gültigkeitsdaten der Zugangsberechtigung seitens des Nutzers über die Verbindung zur Datenkommunikation zwischen dem elektronischen Gerät (1) und dem Server (2) des Ausstellers der Zugangsberechtigung ein Zahlungsprozess über im elektronischen Gerät (1) oder beim Server (2) des Ausstellers der Zugangsberechtigung abgelegte oder manuell einzugebende Kreditkarten- oder Kontodaten durchführbar ist.

6. Elektronische Zugangsberechtigung nach Anspruch 4 oder 5, **dadurch gekennzeichnet, dass** der Nutzer bei Annahme gewünschter Änderungen der örtlichen und/oder zeitlichen Gültigkeitsdaten einer elektronischen Zugangsberechtigung über ein optisches und/oder akustisches Signal, welches über das elektronische Gerät (1) bei oder nach Erhalt der vom Aussteller der elektronischen Zugangsberechtigung angenommenen Änderungen erzeugt wird, informiert wird.

7. Elektronische Zugangsberechtigung nach Anspruch 4, 5 oder 6, **dadurch gekennzeichnet, dass** die angenommenen Änderungen der örtlichen und/oder zeitlichen Gültigkeitsdaten einer elektronischen Zugangsberechtigung über eine Push-Mitteilung, die Informationen über die Änderungen enthält, auf die im elektronischen Gerät (1) abgelegte elektronische Zugangsberechtigung übertragbar sind.

8. Verfahren zur Verwendung einer elektronischen Zugangsberechtigung nach einem der vorangehenden Ansprüche, wobei die Zugangsberechtigung örtliche und zeitliche Gültigkeitsdaten enthält, die von einer Zugangskontrollvorrichtung (4) berührungslos auslesbar sind, und online erwerbbar bzw. für den Fall einer Akkreditierung als Sonderform einer Zugangsberechtigung online beantragbar ist und nach erfolgreichem Ausstellen in elektronischer Form auf ein elektronisches Gerät (1) eines Nutzers übertragen wird, **dadurch gekennzeichnet, dass** Änderungen seitens des Ausstellers der Zugangsberechtigung bezüglich der Gültigkeitsdaten der Zugangsberechtigung mittels einer Verbindung zur Datenkommunikation zwischen einem Server (2) des Ausstellers der Zugangsberechtigung und dem elektronischen Gerät (1) auf die im elektronischen Gerät (1) abgelegte elektronische Zugangsberechtigung übertragen werden, wodurch die Zugangsberechtigung mit den neuen Gültigkeitsdaten aktualisiert wird, und über eine Anzeigevorrichtung (5) des elektronischen Geräts (1) angezeigt werden.

9. Verfahren zur Verwendung einer elektronischen Zugangsberechtigung nach Anspruch 8, **dadurch gekennzeichnet, dass** der Nutzer bei Änderungen der örtlichen und/oder zeitlichen Gültigkeitsdaten einer elektronischen Zugangsberechtigung seitens des Ausstellers der Zugangsberechtigung über ein optisches und/oder akustisches Signal, welches über das elektronische Gerät (1) bei oder nach Erhalt der Änderungen erzeugt wird, informiert wird.

10. Verfahren zur Verwendung einer elektronischen Zugangsberechtigung nach Anspruch 8 oder 9, **dadurch gekennzeichnet, dass** die Änderungen der örtlichen und/oder zeitlichen Gültigkeitsdaten einer elektronischen Zugangsberechtigung seitens des Ausstellers der Zugangsberechtigung über eine Push-Mitteilung, die Informationen über die Änderungen enthält, auf die im elektronischen Gerät (1) abgelegte elektronische Zugangsberechtigung übertragen werden.

11. Verfahren zur Verwendung einer elektronischen Zugangsberechtigung nach Anspruch 8, 9 oder 10, **dadurch gekennzeichnet, dass** gewünschte Änderungen der örtlichen und/oder zeitlichen Gültigkeitsdaten der Zugangsberechtigung seitens des Nutzers über eine ihm über eine Anzeigevorrichtung (5) des elektronischen Gerätes (1) angezeigte grafische Oberfläche der elektronischen Zugangsberechtigung über einen Touchscreen oder menügesteuert eingegeben und mittels einer Verbindung zur Datenkommunikation zum Server (2) des Ausstellers der Zugangsberechtigung übertragen werden, wo sie geprüft werden, wobei der Nutzer über eine Verbindung zur Datenkommunikation zwischen dem elektronischen Gerät (1) mit dem Server (2) des Ausstellers informiert wird, ob die Änderungen angenommen worden sind oder nicht, wobei, wenn Änderungen angenommen worden sind, diese mittels einer Verbindung zur Datenkommunikation zwischen dem Server (2) des Ausstellers der Zugangsberechtigung und dem elektronischen Gerät (1) auf die elektronische Zugangsberechtigung im elektronischen Gerät (1) übertragen werden, wodurch die Zugangsberechtigung mit den neuen Gültigkeitsdaten aktualisiert wird und über die Anzeigevorrichtung (5) des elektronischen Geräts (1) angezeigt werden.

12. Elektronische Zugangsberechtigung nach Anspruch 11, **dadurch gekennzeichnet, dass** bei kostenpflichtigen gewünschten Änderungen der örtlichen und/oder zeitlichen Gültigkeitsdaten der Zugangsberechtigung seitens des Nutzers über die Verbindung zur Datenkommunikation zwischen dem elektronischen Gerät (1) und dem Server (2) des Ausstellers der Zugangsberechtigung ein Zahlungsprozess über im elektronischen Gerät (1) oder beim Server (2) des Ausstellers der Zugangsberechtigung abgelegte oder manuell einzugebende Kreditkarten- oder Kontodaten durchgeführt wird.
